# EUROPEAN PATENT SPECIFICATION

(11) **EP 4 191 750 B1**
(45) Date of publication and mention of the grant of the patent: **26.11.2025**
(21) Application number: 21880565.3
(22) Date of filing: 15.10.2021
(51) Int. Cl.: H01M 10/613, H01M 10/625, H01M 10/6553, H01M 10/6556, H01M 50/502, H01M 50/507

(54) **BATTERY PACK WITH IMPROVED COOLING PERFORMANCE AND DEVICE COMPRISING SAME**
BATTERIEPACK MIT VERBESSERTER KÜHLLEISTUNG SOWIE VORRICHTUNG DAMIT
BLOC-BATTERIE AYANT DES PERFORMANCES DE REFROIDISSEMENT AMÉLIORÉES ET DISPOSITIF LE COMPRENANT

(30) Priority: 15.10.2020 KR 20200133171
(43) Date of publication of application: 07.06.2023
(73) Proprietor: LG Energy Solution, Ltd., Seoul 07335 (KR)
(72) Inventor: KIM, Chan Sol, Daejeon 34122 (KR)
(74) Representative: Plasseraud IP
(86) International application number: PCT/KR2021/014302
(87) International publication number: WO 2022/080918

(56) References cited:
- WO-A1-2018/235473
- WO-A1-2020/026973
- WO-A1-2020/065709
- DE-A1- 102018 218 658
- JP-A- 2018 018 661
- KR-A- 20180 117 033
- KR-A- 20190 064 835
- KR-A- 20200 002 601
- KR-A- 20200 030 968
- KR-A- 20200 058 219
- US-A1- 2020 161 723

## Description

### [Technical Field]

This application claims the benefit of priority to Korean Patent Application No. 2020-0133171 filed on October 15, 2020.

The present invention relates to a battery pack with improved cooling performance and a device including the same, and more particularly to a battery pack with improved cooling performance configured such that a busbar and a cooling member are integrally formed, whereby it is possible to directly cool the busbar together with a battery module, and therefore the temperature of the battery pack is stably maintained, and a device including the same.

### [Background Art]

With recent development of alternative energies due to air pollution and energy depletion caused as the result of use of fossil fuels, demand for secondary batteries capable of storing electrical energy that is produced has increased. The secondary batteries, which are capable of being charged and discharged, are intimately used in daily life. For example, the secondary batteries are used in mobile devices, electric vehicles, and hybrid electric vehicles.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle.

Meanwhile, although a secondary battery exhibits excellent electrical properties, output required by a device is increased, whereby the amount of current that flows in the secondary battery is increased, and therefore the temperature of the secondary battery may be abruptly increased.

In addition, an active material and an electrolyte, which are components of the secondary battery, are decomposed in an abnormal operation state of the secondary battery, such as overcharging, over-discharging, or overcurrent, whereby heat and gas are generated, and therefore the secondary battery expands, i.e. a swelling phenomenon occurs. The swelling phenomenon accelerates decomposition, whereby the secondary battery catches fire or explodes due to thermal runaway.

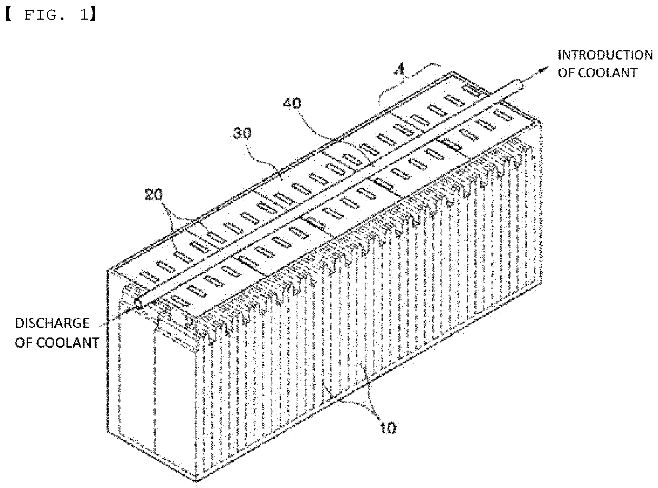

FIG. 1 is a perspective view showing a conventional battery module. As shown in FIG. 1, the conventional battery module includes a plurality of battery cells 10, a plurality of busbars 20 configured to electrically connect the plurality of battery cells 10 adjacent to each other to each other, a flat busbar housing 30 attached to the lower surfaces of the plurality of busbars 20, and a coolant circulation pipe 40 attached to the upper surface of the busbar housing 30.

In the conventional battery module, the coolant circulation pipe 40 is provided at the upper surface of the busbar housing 30 to which the plurality of busbars 20 is connected. Consequently, heat generated in the battery module is removed by the coolant circulation pipe 40 via the busbars 20, whereby the busbars 20 are also cooled.

In the conventional battery module, however, the coolant circulation pipe 40 is merely disposed above the busbars 20, whereby cooling efficiency is low, and the overall volume of the battery module is increased due to the coolant circulation pipe 40.

### (Prior Art Document)

(Patent Document 1) Korean Patent Application Publication No. 2019-0140669

Document WO 2020/065709 A1 discloses a battery module with improved cooling efficiency of a battery cell. Document WO 2020/026973 A1 relates to a battery module and a battery pack that can facilitate efficient cooling of an inside of a secondary battery and can facilitate downsizing of a bus bar. Document WO 2018/235473 A1 relates to a terminal cooling device for cooling a power supply terminal of a battery pack or a power supply terminal of a power supply wire. Document US 2020/161723 A1 relates to relates to a cooling device and a battery apparatus including the cooling device.

### [Disclosure]

### [Technical Problem]

The present invention has been made in view of the above problems, and it is an object of the present invention to provide a battery pack with improved cooling performance configured such that an increase in volume of the battery pack is minimized while heat generated from battery modules and a busbar configured to connect the battery modules is simultaneously removed by cooling and a device including the same.

It is another object of the present invention to provide a battery pack with improved cooling performance configured such that a cooling member and a busbar are integrally coupled to each other, whereby a manufacturing process is simplified, and a device including the same.

It is a further object of the present invention to provide a battery pack with improved cooling performance configured such that a busbar is rapidly cooled, whereby the surface area of the busbar is reduced, and a device including the same.

### [Technical Solution]

In order to accomplish the above objects, a battery pack according to the present invention includes a pack case (100) having a predetermined space defined therein, a plurality of battery modules (200) received in the pack case (100), a busbar (400) electrically connecting the plurality of battery modules (200) together, and a cooling member (500) provided under the pack case (100), wherein a predetermined region of the busbar (400) is located in the cooling member (500).

Also, in the battery pack according to the present invention, the pack case (100) may include an upper pack case (110) and a lower pack case (120), and the lower pack case (120) may include a first slit (121) configured to allow the busbar (400) to extend through the first slit.

Also, in the battery pack according to the present invention, the cooling member (500) may include a body portion (510) and a cooling pipe (520).

Also, in the battery pack according to the present invention, the body portion (510) may include a second slit (511) configured to allow the busbar (400) to extend through the second slit.

Also, in the battery pack according to the present invention, the cooling pipe (520) may be located in the body portion (510) in a buried state.

Also, in the battery pack according to the present invention, the busbar (400) may include a horizontal portion (410) and vertical portions (420) formed at opposite edges of the horizontal portion (410), wherein each of the vertical portions extends in a vertical direction by a predetermined length.

Also, in the battery pack according to the present invention, the horizontal portion (410) of the busbar (400) and predetermined parts of the vertical portions (420) of the busbar are located in the body portion (510) in a buried state.

Also, in the battery pack according to the present invention, the cooling pipe (520) may be located lower than the buried horizontal portion (410) and the buried vertical portions (420) of the busbar (400).

Also, in the battery pack according to the present invention, the busbar (400) and the cooling pipe (520) may be integrally formed with the body portion (510) by insert injection molding.

In addition, the present invention provides a device including the battery pack.

### [Advantageous Effects]

As is apparent from the above description, a battery pack with improved cooling performance according to the present invention and a device including the same have an advantage in that it is possible to directly cool a busbar through a cooling member, whereby it is possible to rapidly remove heat from the busbar.

In addition, the battery pack with improved cooling performance according to the present invention and the device including the same have a merit in that the busbar and the cooling member are integrally formed by insert injection molding, whereby a coupling member configured to couple the busbar and the cooling member to each other is omitted, and therefore it is possible to reduce manufacturing costs.

Furthermore, the battery pack with improved cooling performance according to the present invention and the device including the same have an advantage in that the busbar is buried in the cooling member, whereby it is possible to minimize an increase in volume of the battery pack, and therefore energy density of the battery pack is high.

### [Description of Drawings]

FIG. 1 is a perspective view showing a conventional battery module.
FIG. 2 is a perspective view of a battery pack according to a preferred embodiment of the present invention.
FIG. 3 is an exploded perspective view of the battery pack shown in FIG. 2.
FIG. 4 is an exploded perspective view illustrating a coupling structure between a busbar and a cooling member according to the present invention.
FIG. 5 is a sectional view taken along line A-A' of FIG. 3.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery pack with improved cooling performance according to the present invention will be described with reference to the accompanying drawings.

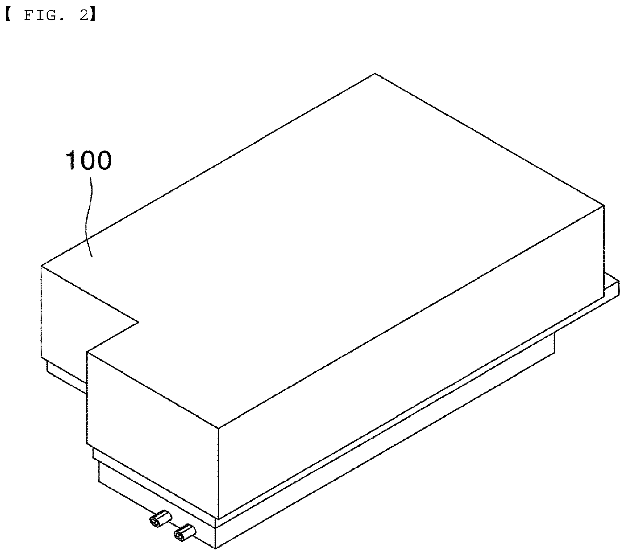

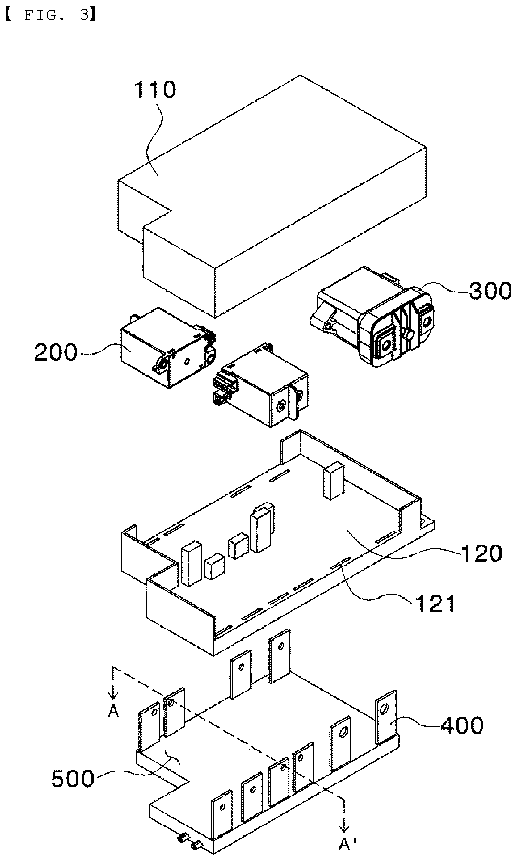

FIG. 2 is a perspective view of a battery pack according to a preferred embodiment of the present invention, and FIG. 3 is an exploded perspective view of the battery pack shown in FIG. 2.

As shown in FIGS. 2 and 3, the battery pack according to the present invention includes a pack case 100, a plurality of battery modules 200 received in the pack case 100, a battery disconnect unit (BDU) 300, a busbar 400 configured to electrically connect the plurality of battery modules 200 to each other, and a cooling member 500 located under the pack case 100.

First, the pack case 100 is constituted by an upper pack case 110 and a lower pack case 120 configured to define a predetermined space.

The lower pack case 120 is constituted by a flat bottom surface and side surfaces configured to stably support various kinds of components, such as the battery modules 200 and the battery disconnect unit (BDU) 300. In particular, a plurality of first slits 121 is formed in predetermined regions of the edge of the bottom surface such that vertical portions 420 of the busbar 400, a description of which will follow, extend through the first slits so as to protrude above the bottom surface.

The upper pack case 110 is coupled to the upper part of the lower pack case 120, and protects various kinds of components mounted therein from external impact.

The battery module 200 received in the pack case 100 includes a plurality of battery cells (not shown) and a module case configured to protect the battery cells.

As an example, the battery cell may include a cell case configured to receive an electrode assembly (not shown) and a pair of electrode leads.

Here, the electrode assembly may be a jelly-roll type assembly, which is configured to have a structure in which a long sheet type positive electrode and a long sheet type negative electrode are wound in the state in which a separator is interposed therebetween, a stacked type assembly which is configured to have a structure in which a rectangular positive electrode and a rectangular negative electrode are stacked in the state in which a separator is interposed therebetween, a stacked and folded type assembly, which is configured to have a structure in which unit cells are wound using a long separation film, or a laminated and stacked type assembly, which is configured to have a structure in which battery cells are stacked in the state in which a separator is interposed therebetween and are then attached to each other. However, the present invention is not limited thereto.

The electrode assembly is received in the cell case. The cell case is generally configured to have a laminate sheet structure including an inner layer, a metal layer, and an outer layer. The inner layer is disposed in direct contact with the electrode assembly, and therefore the inner layer must exhibit high insulation properties and high resistance to an electrolytic solution. In addition, the inner layer must exhibit high sealability in order to hermetically seal the cell case from the outside, i.e. a thermally-bonded sealed portion between inner layers must exhibit excellent thermal bonding strength. The inner layer may be made of a material selected from among a polyolefin-based resin, such as polypropylene, polyethylene, polyethylene acrylate, or polybutylene, a polyurethane resin, and a polyimide resin, which exhibit excellent chemical resistance and high sealability. However, the present invention is not limited thereto, and polypropylene, which exhibits excellent mechanical-physical properties, such as tensile strength, rigidity, surface hardness, and impact strength resistance, and excellent chemical resistance, is the most preferably used.

The metal layer, which is disposed so as to abut the inner layer, corresponds to a barrier layer configured to prevent moisture or various kinds of gas from permeating into the battery from the outside. An aluminum thin film, which is light and easily shapeable, may be used as a preferred material for the metal layer.

The outer layer is provided on the other surface of the metal layer. The outer layer may be made of a heat-resistant polymer that exhibits excellent tensile strength, resistance to moisture permeation, and resistance to air transmission such that the outer layer exhibits high heat resistance and chemical resistance while protecting the electrode assembly. As an example, the outer layer may be made of nylon or polyethylene terephthalate. However, the present invention is not limited thereto.

Meanwhile, the pair of electrode leads is constituted by a positive electrode lead and a negative electrode lead, which may be exposed from the cell case in a state of being electrically connected respectively to positive electrode tabs and negative electrode tabs of the electrode assembly or may be directly connected to the electrode assembly in the state in which tabs are omitted.

Although two battery modules 200 are shown as being received in the figures, which is merely an illustration, and it is obvious that the number of battery modules 200 received in the pack case 100 may be changed without limit.

Next, the battery disconnect unit (BDU) 300 is a device that is mounted adjacent to the battery module 200, that is connected to the battery modules 200 via the busbar 400, and that is configured to control electrical connection between the electrode modules 200. The BDU 300 is a known construction, and therefore a detailed description thereof will be omitted.

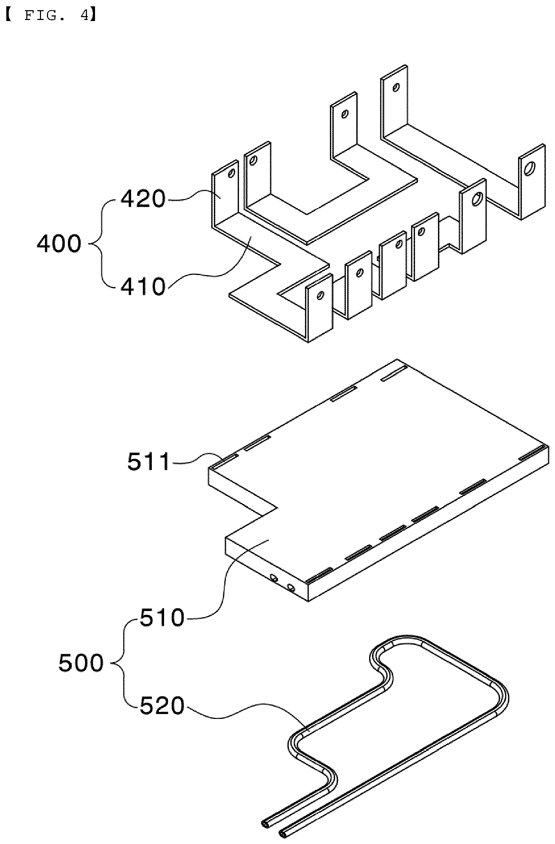

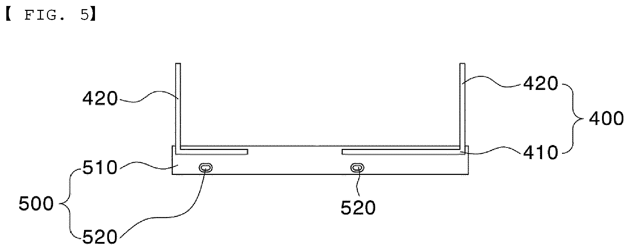

FIG. 4 is an exploded perspective view illustrating a coupling structure between the busbar and the cooling member according to the present invention, and FIG. 5 is a sectional view taken along line A-A' of FIG. 3.

Referring to FIGS. 4 and 5, the busbar 400 is bent so as to have a predetermined shape. Specifically, the busbar 400 is constituted by a horizontal portion 410 and vertical portions 420 formed at opposite edges of the horizontal portion 410 so as to extend by a predetermined length in a vertical direction.

The reason that the busbar 400 is bent to form the horizontal portion 410 and the vertical portions 420 is that it is necessary to rapidly cool the busbar 400 through contact with the cooling member 500.

That is, as shown in FIGS. 4 and 5, the horizontal portion 410 of the busbar 400 is located in the cooling member 500, whereas the vertical portions 420 sequentially extend through second slits 511 of the cooling member 500 and the first slits 121 of the lower pack case 120 and then protrude above. Of course, the protruding vertical portions 420 of the busbar 400 electrically connect the battery modules 200 and the BDU 300 to each other.

Meanwhile, the cooling member 500 is located under the lower pack case 120, and removes heat generated from the battery modules 200 and the battery disconnect unit (BDU) 300 seated on the lower pack case 120 and the busbar 400 in the cooling member 500 by cooling.

Here, the cooling member 500 includes a body portion 510 and a cooling pipe 520 buried in the body portion 510.

The body portion 510 is configured in a flat shape having a predetermined height and area, and the horizontal portion 410 of the busbar 400, predetermined parts of the vertical portions 420 of the busbar, and the cooling pipe 520 are located in the body portion in a buried state. It is preferable for the cooling pipe 520 to be located slightly lower than the horizontal portion 410 of the busbar 400.

It is preferable for the body portion 510 to be made of thermally conductive plastic, although the material for the body portion is not particularly restricted. The body portion 510, the busbar 400, and the cooling pipe 520 may be integrally manufactured by insert injection molding.

Since the body portion 510, the busbar 400, and the cooling pipe 520 are integrally formed by molding, as described above, neither a separate adhesive member nor a separate fixing member is needed, whereby a manufacturing process is simplified.

In addition, since the horizontal portion 410 of the busbar 400 is located adjacent to the cooling pipe 520 buried in the body portion 510, no separate cooling means configured to cool the busbar 400 is needed, and an increase in volume of the battery pack is inhibited, whereby energy density of the battery pack is improved.

The present invention may provide a device including a battery pack having at least one of the above-mentioned features, and the device may be an electric vehicle, a hybrid electric vehicle, or a plug-in hybrid electric vehicle.

### (Description of Reference Numerals)

100: Pack case
110: Upper pack case
120: Lower pack case
121: First slit
200: Battery module
300: Battery disconnect unit (BDU)
400: Busbar
410: Horizontal portion
420: Vertical portion
500: Cooling member
510: Body portion
511: Second slit
520: Cooling pipe

## Claims

1. A battery pack comprising:
a pack case (100) having a predetermined space defined therein;
a plurality of battery modules (200) received in the pack case (100);
a busbar (400) electrically connecting the plurality of battery modules together (200); and
a cooling member (500) provided under the pack case (100),
**characterized in that** a horizontal portion (410) of the busbar (400) is located in the cooling member (500), whereas vertical portions (420) of the busbar (400) sequentially extend through second slits (511) of the cooling member (500) and first slits (121) of a lower pack case (120) and then protrude above.

2. The battery pack according to claim 1, wherein the pack case (100) comprises an upper pack case (110) and a lower pack case (120), and
wherein the lower pack case (120) comprises a first slit (121) configured to allow the busbar (400) to extend through the first slit (121).

3. The battery pack according to claim 1, wherein the cooling member (500) comprises a body portion (510) and a cooling pipe (520).

4. The battery pack according to claim 3, wherein the body portion (510) comprises a second slit (511)configured to allow the busbar (400) to extend through the second slit (511).

5. The battery pack according to claim 4, wherein the cooling pipe (520) is located in the body portion (510) in a buried state.

6. The battery pack according to claim 2, wherein the busbar (400) comprises:
a horizontal portion (410); and
vertical portions (420) formed at opposite edges of the horizontal portion (410),
wherein each of the vertical portions (420) extends in a vertical direction by a predetermined length.

7. The battery pack according to claim 6, wherein the horizontal portion (410) of the busbar (400) and predetermined parts of the vertical portions (420) of the busbar (400) are located in the body portion (510) in a buried state.

8. The battery pack according to claim 7, wherein the cooling pipe (520) is located lower than the buried horizontal portion (410) and the buried vertical portions (420) of the busbar (400).

9. The battery pack according to claim 8, wherein the busbar (400) and the cooling pipe (520) are integrally formed with the body portion (510) by insert injection molding.

10. A device comprising the battery pack according to any one of claims 1 to 9.

## Patentansprüche

1. Batteriepack, umfassend:
ein Packgehäuse (100), welches einen vorbestimmten Raum darin definiert aufweist;
eine Mehrzahl von Batteriemodulen (200), welche in dem Packgehäuse (100) aufgenommen sind;
eine Sammelschiene (400), welche die Mehrzahl von Batteriemodulen (200) miteinander elektrisch verbindet; und
ein Kühlungselement (500), welches unter dem Packgehäuse (100) bereitgestellt ist,
**dadurch gekennzeichnet, dass** ein horizontaler Abschnitt (410) der Sammelschiene (400) in dem Kühlungselement (500) angeordnet ist, während sich vertikale Abschnitte (420) der Sammelschiene (400) sequenziell durch zweite Schlitze (511) des Kühlungselements (500) und erste Schlitze (121) eines unteren Packgehäuses (120) erstrecken und dann nach oben vorstehen.

2. Batteriepack nach Anspruch 1, wobei das Packgehäuse (100) ein oberes Packgehäuse (110) und ein unteres Packgehäuse (120) umfasst, und
wobei das untere Packgehäuse (120) einen ersten Schlitz (121) umfasst, welcher dazu eingerichtet ist, der Sammelschiene (400) zu erlauben, sich durch den ersten Schlitz (121) zu erstrecken.

3. Batteriepack nach Anspruch 1, wobei das Kühlungselement (500) einen Körperabschnitt (510) und ein Kühlungsrohr (520) umfasst.

4. Batteriepack nach Anspruch 3, wobei der Körperabschnitt (510) einen zweiten Schlitz (511) umfasst, welcher dazu eingerichtet ist, der Sammelschiene (400) zu erlauben, sich durch den zweiten Schlitz (511) zu erstecken.

5. Batteriepack nach Anspruch 4, wobei das Kühlungsrohr (520) in dem Körperabschnitt (510) in einem bedeckten Zustand angeordnet ist.

6. Batteriepack nach Anspruch 2, wobei die Sammelschiene (400) umfasst:
einen horizontalen Abschnitt (410); und
vertikale Abschnitte (420), welche an entgegengesetzten Rändern des horizontalen Abschnitts (410) ausgebildet sind,
wobei sich jeder der vertikalen Abschnitte (420) in einer vertikalen Richtung um eine vorbestimmte Länge erstreckt.

7. Batteriepack nach Anspruch 6, wobei der horizontale Abschnitt (410) der Sammelschiene (400) und vorbestimmte Teile der vertikalen Abschnitte (420) der Sammelschiene (400) in dem Körperabschnitt (510) in einem bedeckten Zustand angeordnet sind.

8. Batteriepack nach Anspruch 7, wobei das Kühlungsrohr (520) niedriger als der bedeckte horizontale Abschnitt (410) und die bedeckten vertikalen Abschnitte (420) der Sammelschiene (400) angeordnet ist.

9. Batteriepack nach Anspruch 8, wobei die Sammelschiene (400) und das Kühlungsrohr (520) integral mit dem Körperabschnitt (510) durch Einsatzspritzgießen ausgebildet sind.

10. Vorrichtung, umfassend den Batteriepack nach einem der Ansprüche 1 bis 9.

## Revendications

1. Bloc-batterie comprenant :
un boîtier de bloc (100) ayant un espace prédéterminé défini dans celui-ci ;
une pluralité de modules de batterie (200) reçus dans le boîtier de bloc (100) ;
une barre omnibus (400) connectant électriquement la pluralité de modules de batterie (200) les uns aux autres ; et
un élément de refroidissement (500) prévu sous le boîtier de bloc (100),
**caractérisé en ce que**
une partie horizontale (410) de la barre omnibus (400) est située dans l'élément de refroidissement (500), tandis que des parties verticales (420) de la barre omnibus (400) s'étendent séquentiellement à travers des secondes fentes (511) de l'élément de refroidissement (500) et des premières fentes (121) d'un boîtier de bloc inférieur (120) puis font saillie au-dessus.

2. Bloc-batterie selon la revendication 1, dans lequel le boîtier de bloc (100) comprend un boîtier de bloc supérieur (110) et un boîtier de bloc inférieur (120), et
dans lequel le boîtier de bloc inférieur (120) comprend une première fente (121) configurée pour permettre à la barre omnibus (400) de s'étendre à travers la première fente (121).

3. Bloc-batterie selon la revendication 1, dans lequel l'élément de refroidissement (500) comprend une partie corps (510) et un tuyau de refroidissement (520).

4. Bloc-batterie selon la revendication 3, dans lequel la partie corps (510) comprend une seconde fente (511) configurée pour permettre à la barre omnibus (400) de s'étendre à travers la seconde fente (511).

5. Bloc-batterie selon la revendication 4, dans lequel le tuyau de refroidissement (520) est situé dans la partie corps (510) dans un état enfoui.

6. Bloc-batterie selon la revendication 2, dans lequel la barre omnibus (400) comprend :
une partie horizontale (410) ; et
des parties verticales (420) formées au niveau de bords opposés de la partie horizontale (410),
dans lequel chacune des parties verticales (420) s'étend dans une direction verticale sur une longueur prédéterminée.

7. Bloc-batterie selon la revendication 6, dans lequel la partie horizontale (410) de la barre omnibus (400) et des pièces prédéterminées des parties verticales (420) de la barre omnibus (400) sont situées dans la partie corps (510) dans un état enfoui.

8. Bloc-batterie selon la revendication 7, dans lequel le tuyau de refroidissement (520) est situé plus bas que la partie horizontale (410) enfouie et les parties verticales (420) enfouies de la barre omnibus (400).

9. Bloc-batterie selon la revendication 8, dans lequel la barre omnibus (400) et le tuyau de refroidissement (520) sont formés d'un seul tenant avec la partie corps (510) par moulage par injection d'insert.

10. Dispositif comprenant le bloc-batterie selon l'une quelconque des revendications 1 à 9.
